# EUROPEAN PATENT SPECIFICATION

(11) **EP 0 640 464 B1**
(45) Date of publication and mention of the grant of the patent: **16.09.1998**
(21) Application number: 94305284.5
(22) Date of filing: 19.07.1994
(51) Int. Cl.: B29C 57/00, F16L 55/165

(54) **Method of manufacturing a branch pipe liner bag**
Verfahren zum Herstellen eines Auskleidungsschlauches für eine Abzweigeleitung
Procédé de fabrication d'un revêtement pour tuyauterie latérale

(30) Priority: 31.08.1993 JP 216420/93
(43) Date of publication of application: 01.03.1995
(73) Proprietor: SHONAN GOSEI - JUSHI SEISAKUSHO K.K., Hiratsuka-shi, Kanagawa-ken (JP); YOKOSHIMA & COMPANY, Yuki-gun, Ibaraki-ken (JP); GET Inc., Iwai-shi, Ibaraki-ken (JP)
(72) Inventor: Kamiyama, Takao, Hiratsuka-shi, Kanagawa-ken (JP); Yokoshima, Yasuhiro, Yuki-gun, Ibaraki-ken (JP); Endoh, Shigeru, Niihari-gun, Ibaraki-ken (JP)
(74) Representative: Whalley, Kevin

(56) References cited:
- EP-A- 0 487 179
- EP-A- 0 518 521
- GB-A- 1 591 323
- GB-A- 2 145 273
- US-A- 3 430 661

## Description

The present invention relates to a method of manufacturing a branch pipe liner bag, and more particularly to a method of manufacturing such a branch pipe liner bag for use in repairing an aged or defective branch pipe.

When an underground pipe, such as a pipeline or passageway, becomes defective or too old to perform properly, the pipe is repaired and restored without digging the earth to expose the pipe and disassembling the sections of the pipe. This non-digging method of repairing an underground pipe has been known and practiced commonly in the field of civil engineering. Typically, the method is disclosed by Japanese Provisional Patent Publication (Kokai) No. 60-242038.

According to the method described in the above-mentioned publication, the pipe repair method comprises inserting a sufficiently long tubular flexible liner bag into the pipe to be repaired by means of a pressurized fluid, such as air or water. The tubular liner bag is made of a flexible resin-absorbent material impregnated with a thermosetting resin, and has its outer surface covered with an impermeable plastic film.

More particularly, according to the publication, the tubular flexible liner bag is closed at one end and open at the other; the tubular flexible liner bag is first flattened, and then the closed end of the tubular liner bag is tied to a control rope; the open end of the tubular liner bag is made to gape wide and hooked (anchored) at the end of the defective or old pipe in a manner such that the wide-opened end of the liner completely and fixedly covers and closes the pipe end; a portion of the liner is pushed into the pipe; then, pressurized fluid is applied to the portion of the tubular liner such that the fluid urges the tubular liner to enter the pipe. Since one end of the tubular liner is hooked at the end of the pipe, it remains there while the rest of the flexible liner bag is turned inside out as it proceeds deeper in the pipe. (Hereinafter, this manner of procedure shall be called "everting".) When the entire length of the tubular liner bag is everted (i.e., turned inside out) into the pipe, the control rope holds the closed end of the tubular liner bag to thereby control the length of the tubular liner in the pipe. Then, the everted tubular liner is pressed against the inner wall of the pipe by the pressurized fluid, and the tubular flexible liner is hardened as the thermosetting resin impregnated in the liner is heated, which is effected by heating the fluid filling the tubular liner bag by means of hot steam, etc. It is thus possible to line the inside wall of the defective or old pipe with a rigid liner without digging the ground and disassembling the pipe sections.

With the above-mentioned method, when lining is performed on underground pipes, such as pipelines and passageways, having branch pipes, a main pipe is lined typically after the lining of branch pipes is completed. In this event, a branch pipe liner bag for lining a branch pipe must be closely integrated with a main pipe liner bag for lining the main pipe at a joint. An incompletely formed joint will give rise to a problem that underground water or the like penetrates through the joint into the pipe.

To attend to this problem, a method shown in Figs. 14 - 16 of the accompanying drawings has been proposed, such a method is already known from EP-A-0518521. This prior art method will be explained below.

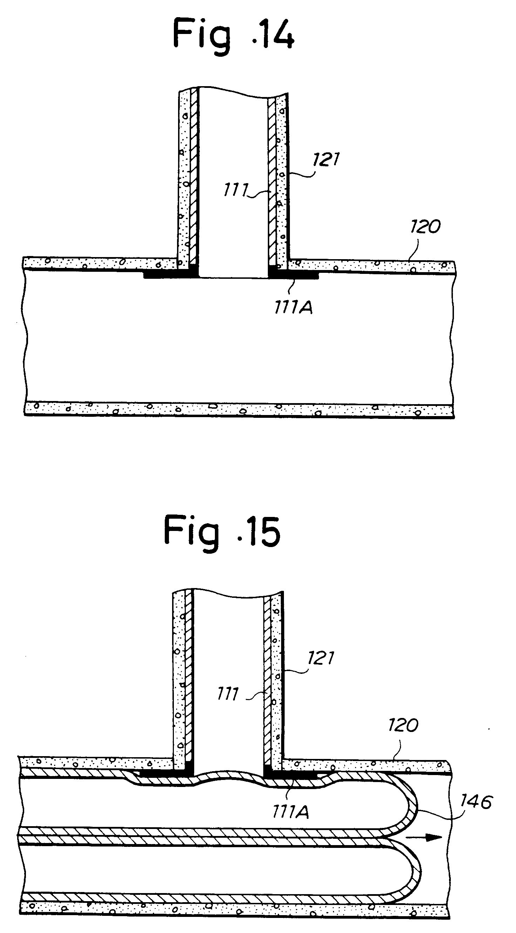

Referring first to Fig. 14, in this method, a flange 111A formed on one end of a branch pipe liner bag 111 is in close contact with the inner wall around an opening of a main pipe 120, at which a branch pipe 121 is branched off. Then, the branch pipe liner bag 111 is everted upwardly into the branch pipe by means of fluid pressure. Thereafter, a hardenable resin impregnated in the branch pipe liner bag 111 is hardened to line the branch pipe 121 in advance of the main pipe 120.

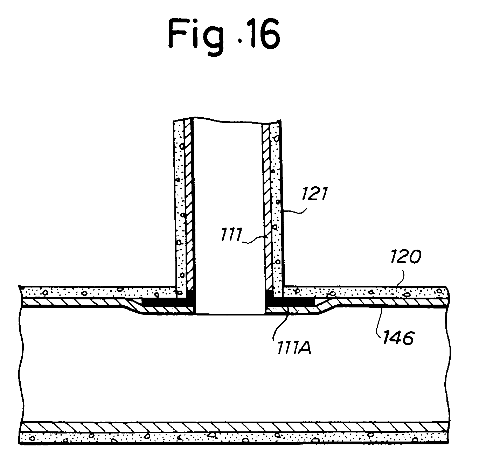

Referring next to Figs. 15 and 16, a main pipe liner bag 146 is likewise everted into the main pipe by means of fluid pressure. When this main pipe liner bag 146 has been everted, a hardenable resin impregnated in the main pipe liner bag 146 is hardened to line the main pipe 120. Finally, a portion of the main pipe liner bag 146 corresponding to she opening to the branch pipe 121 is cut away by a cutter, not shown, thus completing a lining operation for the branch pipe 121 and the main pipe 120. EP-A-0518521 further discloses a method for making a branch pipe lining assembly.

However, even with the above-mentioned pipe lining method, it is not possible to provide a complete integration of the joining portions of the flange 111A of the branch pipe liner bag 111 and the main pipe liner bag 146, whereby underground water or the like cannot be completely prevented from penetrating through the joint into the pipes.

The present invention has been made in view of the above-mentioned problem, and it is an object of the present invention to provide a method of manufacturing a branch pipe liner bag which can be integrally joined with a main pipe liner bag so as to ensure that water is prevented from penetrating from a joining portion between the main pipe and the branch pipe.

The present invention provides a method of manufacturing a branch pipe liner bag comprising the steps of: preparing a tubular unwoven fabric member having its outer surface covered with a highly sealable film; tearing off a portion of the film covering one end portion of the tubular unwoven fabric member; cutting a plurality of slits into the end portion of the tubular unwoven fabric member from which the film has been removed, the slits extending in the longitudinal direction of the tubular unwoven fabric member; folding out the end portion of the tubular unwoven fabric member; mounting the folded-out end portion on a first unwoven fabric sheet for forming a flange which has previously been set on a frame having the same shape as the inner wall of a main pipe; placing a second unwoven fabric sheet for forming a flange on the folded-out end portion of the tubular unwoven fabric member such that the folded-out end portion is sandwiched by the first and second unwoven fabric sheets for forming a flange; impregnating a liquid hardenable resin into the end portion of the tubular unwoven fabric member and the first and second unwoven fabric sheets; hardening the liquid hardenable resin impregnated in the end portion of the tubular unwoven fabric member and the first and second unwoven fabric sheets; and impregnating a hardenable resin into a remaining portion of the tubular unwoven fabric member.

Preferably, the first and second unwoven fabric sheets for forming a flange have the outer surface thereof covered with a film, and this film is torn off from each of the first and second unwoven fabric sheets after the hardenable resin impregnated in the first and second unwoven fabric sheets has been hardened.

According to the present invention, the folded-out end portion of the branch pipe liner bag is sandwiched by the first and second unwoven fabric sheets to be formed as a flange. This flange is formed in the same shape as the inner wall of the main pipe (i.e., in an arcuate surface having the same curvature as the inner wall of the main pipe) by the frame, so that the adhesive properties of the flange with the main pipe liner bag are highly improved, and both are completely integrated, whereby water is prevented from penetrating from the joining portion into the pipes.

Particularly, the surface of the unwoven fabric sheet constituting the flange of the branch pipe liner bag, to be brought into contact with the main pipe liner bag, may be covered with a film, such that the film is torn off after the hardenable resin impregnated in the unwoven fabric sheet has been hardened to provide the unwoven fabric sheet with a coarse surface which further improves the adhesive properties of the flange with the main pipe liner bag, thus ensuring a reliable integration of the flange and the main pipe liner bag.

The invention will be further described, by way of example only, with reference to the accompanying drawings, in which:
Figs. 1 and 2 are lateral views of a tubular unwoven fabric member;
Fig. 3 is a cross-sectional view of the tubular unwoven fabric member taken along a line A-A in Fig. 1;
Fig. 4 is a perspective view showing a tubular unwoven fabric member which has one end folded out (everted and depressed);
Fig. 5 is a partial cross-sectional view of the tubular unwoven fabric member which is mounted on a frame;
Fig. 6 is a top view of the tubular unwoven fabric member of Fig. 5 mounted on the frame;
Fig. 7 is a partial cross-sectional view of a tubular unwoven fabric member for explaining how a thermosetting resin is impregnated;
Figs. 8(a) - 8(c) are plan views showing other examples of unwoven fabric sheets for forming a flange;
Figs. 9 - 13 are cross-sectional views showing a branch pipe lining method in the order of the steps of the process; and
Figs. 14 - 16 are cross-sectional views showing a conventional pipe lining method.

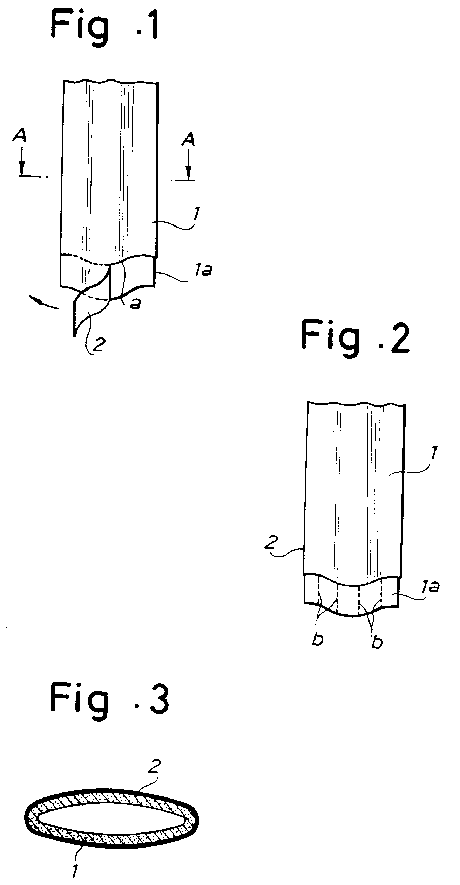

The present invention will hereinafter be described in connection with a preferred embodiment thereof with reference to Figs. 1 - 7 of the accompanying drawings.

Referring to Fig. 1, a tubular unwoven fabric member 1 has its outer surface covered with a highly sealable plastic film 2 (see Fig. 3), one end of which is cut in a curved manner along the shape of the inner wall of a main pipe. The plastic film 2 may comprise a film made of polyethylene, vinyl chloride, vinylon, polyurethane, nylon, polypropylene, polyethylene/nylon co-polymer or the like. Materials suitable for the tubular unwoven fabric 1 may include polyester, nylon, acrylic resin, and vinylon.

As shown in Fig. 1, part of the plastic film covering the outer surface of the one end of the tubular unwoven fabric member 1 is torn off in a suitable width along a curved cut line a which extends in conformity to the shape of the inner wall of the main pipe.

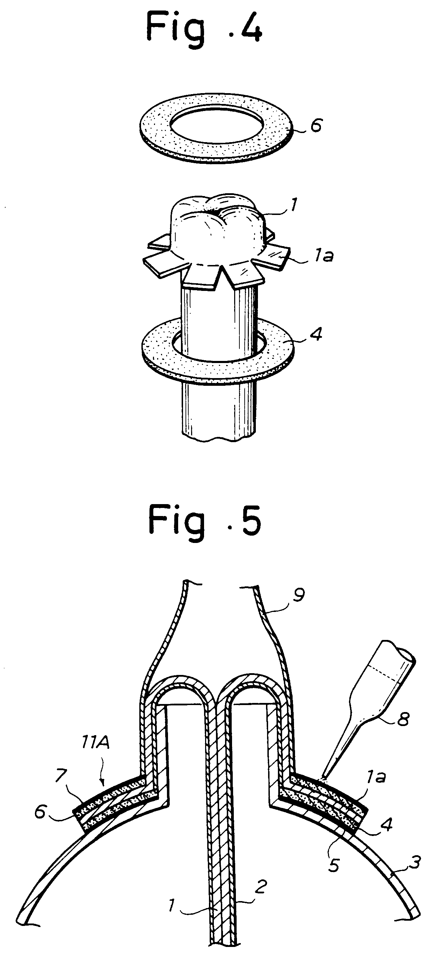

Next, referring to Fig. 2, a plurality of slits b are cut into an end portion 1a of the tubular unwoven fabric 1, from which the plastic film 2 has been torn off, over the whole periphery of the tubular unwoven fabric member 1 at proper intervals in the longitudinal direction (vertical direction in Fig. 2). Then, when this portion 1a is folded out as shown in Fig. 4, it opens from the slits b in the shape of a flower.

On the other hand, a ring-shaped unwoven fabric sheet 4 for forming a flange is set on a curved surface of a frame 3 having the same shape as the inner wall of the main pipe, as shown in Fig. 5. The bottom surface of the unwoven fabric sheet 4 (the surface in contact with the frame 3) may be covered with a plastic film 5.

The end portion 1a of the tubular unwoven fabric member 1 folded out and opened in a flower shape as mentioned above is arranged on the unwoven fabric sheet 4 which has previously been set on the frame 3. On the top of the tubular unwoven fabric member 1 is placed another ring-shaped unwoven fabric sheet 6 for forming a flange, so as to sandwich the end portion 1a of the tubular unwoven fabric member 1 between the upper and lower unwoven fabric sheets 6, 4. In this event, an uneverted portion of the tubular unwoven fabric 1 is left suspended from the frame 3.

It should be noted that the upper surface of the unwoven fabric sheet 6 (the surface in contact with the inner wall of the main pipe) may also be covered with a plastic film 7.

After the end portion 1a of the tubular unwoven fabric member 1 is sandwiched between the ring-shaped unwoven fabric sheets 4, 6, part of the plastic film applied on the upper surface of the upper unwoven fabric sheet 6 is torn off. Then, from this part, a liquid hardenable resin from a container 8 is introduced into the end portion 1a of the tubular unwoven fabric member 1 and the unwoven fabric sheets 4, 6, as shown in Fig. 5. The liquid hardenable resin is hardened, when it has been uniformly impregnated into the end portion 1a and the unwoven fabric sheets 4, 6, which results in hardening the end portion 1a of the tubular unwoven fabric member 1 and the unwoven fabric sheets 4, 6 so that the tubular unwoven fabric member 1 is integrally formed with a flange 11A having an arcuate surface extending along the inner wall of the main pipe.

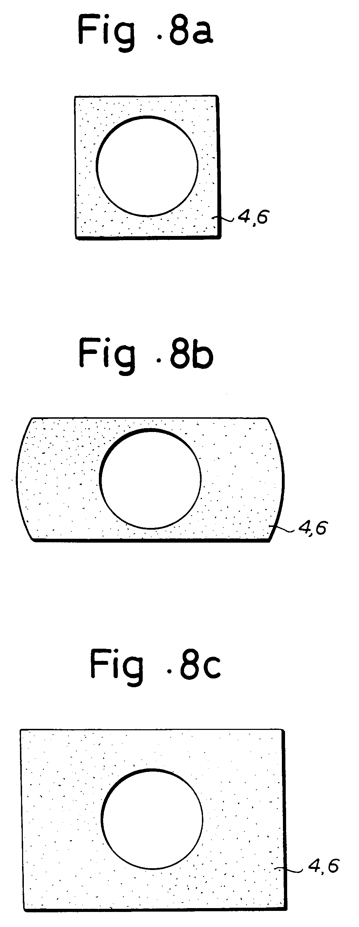

While the ring-shaped unwoven fabric sheets 4, 6 are used in this embodiment for forming the flange 11A integrally with the tubular unwoven fabric member 1, unwoven fabric sheets of another shape, i.e., square, rectanglar or the like, as shown in Figs. 8(a) - 8(c), may also be used for the same purpose.

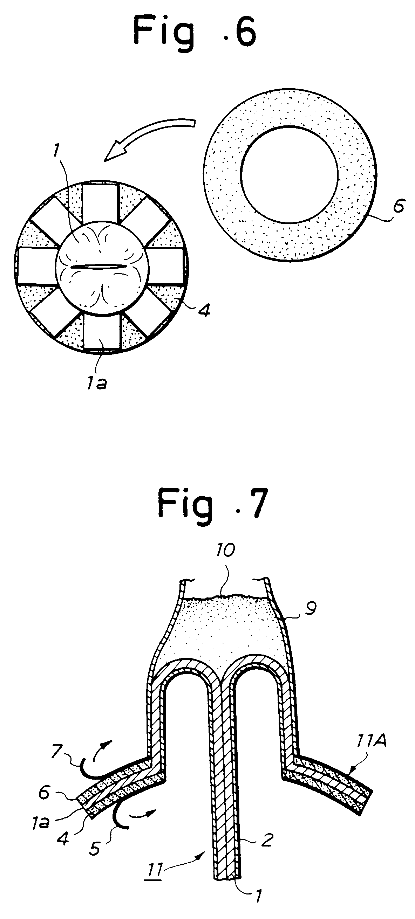

When the flange 11A has been formed as described above, the uneverted portion of the tubular unwoven fabric member 1 is evacuated by a vacuum pump, not shown, such that the uneverted portion of the tubular unwoven fabric 1 is impregnated with a thermosetting resin 10 contained in a resin introducing bag 9, as shown in Fig. 7.

When the uneverted portion of the tubular unwoven fabric 1 has been uniformly impregnated with the thermosetting resin 10, the plastic film 5 applied on the bottom surface of the lower unwoven fabric sheet 4 and the plastic film 7 applied on the upper surface of the upper unwoven fabric sheet 6 are torn off, thus completing the formation of a desired branch pipe liner bag 11.

Next, there will be described a method of repairing a branch pipe using the branch pipe liner bag 11 manufactured as described above.

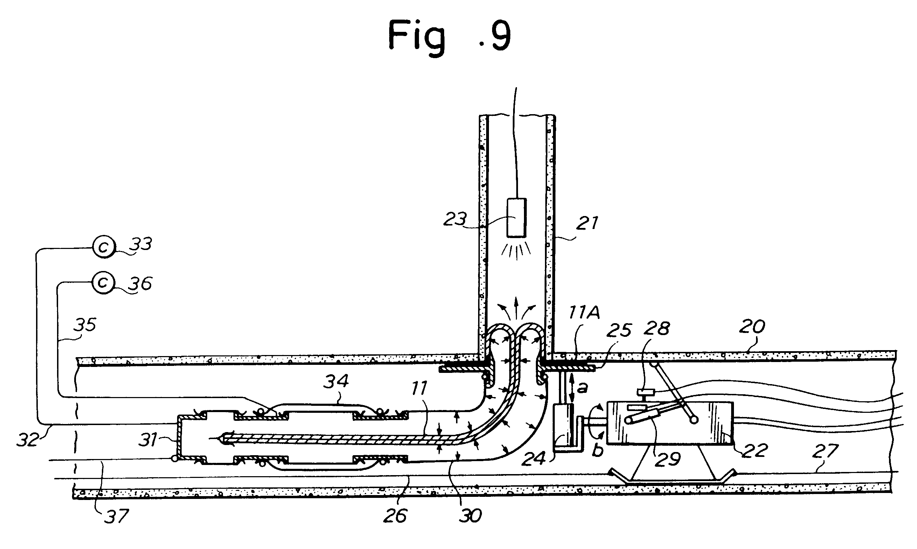

Figs. 9 - 11 are cross-sectional views showing a branch pipe lining method in the order of the steps thereof. A main pipe 20 has a branch pipe 21 having a smaller diameter and branched therefrom. As shown in Fig. 9, a robot 22 and the branch pipe liner bag 11 have been introduced into the main pipe 20, while a TV camera 23 for monitoring is suspended in the branch pipe 21.

The robot 22 is a hydraulically driven type and has a head 24 arranged for bi-directional movements along an arrow a as well as for rotation in the direction indicated by an arrow b. The head 24 also supports a fluid pressure sealing nozzle 25. The robot 22 is connected with pull ropes 26, 27 and further is equipped on the top surface thereof with a TV camera 28 for monitoring and a lamp 29 for illumination.

The branch pipe liner bag 11 is mounted adjacent one fluid pressure sealing nozzle 25. More specifically, the branch pipe liner bag 11 has the flange 11A sandwiched between the inner wall of the main pipe 20 and the nozzle 25, and the remaining uneverted portion of the branch pipe liner bag 11, as shown in Fig. 9, extends through the nozzle 25 into a pressure bag 30 which is used later for everting the uneverted portion of the branch pipe liner bag 11.

The pressure bag 30 has one end thereof mounted to the fluid pressure sealing nozzle 25 and the other end closed by a cap 31. The pressure bag 30 is also connected to a compressor 33 through an air hose 32. The pressure bag 30 is further provided over the outer surface thereof with an expandable and contractible tubular sealing pressure bag 34 which is connected to a compressor 36 through an air hose 35. The cap 31 is connected to one end of a pull rope 37.

Pulling the pull ropes 26, 27, 37 causes the robot 22 as well as the branch pipe liner bag 11 and the pressure bag 30 to integrally move in the main pipe 20. As the insides of the main pipe 20 and the branch pipe 21 are being monitored by the TV cameras 23, 28, the flange 11A of the branch pipe liner bag 11 is positioned at an opening communicating with the branch pipe 21, as shown in Fig. 9. Then, the head 24 of the robot 22 is moved upward to urge the flange 11A of the branch pipe liner bag 11 against the inner wall of the main pipe 20 such that the flange 11A is closely contacted to the inner wall of the main pipe 20.

The compressor 33 is next driven to supply compressed air to the pressure bag 30 through the air hose 32, so that the branch pipe liner bag 11 is everted by the pressure of the compressed air and is successively inserted from the main pipe 20 into the branch pipe 21 toward the ground (upward direction).

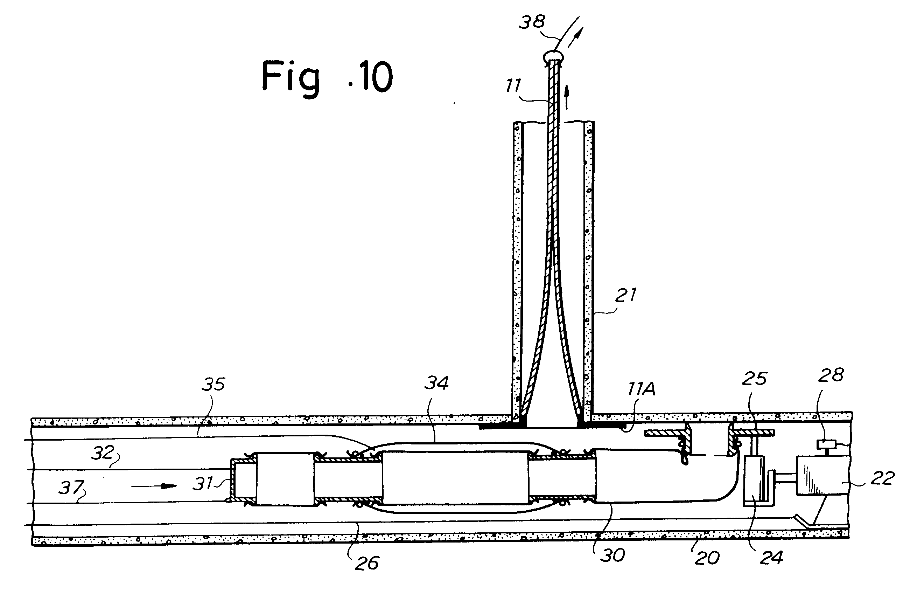

When the branch pipe liner bag 11 has been inserted into the whole length of the branch pipe 21, its upper end portion is pulled up by the use of a rope 38 from the ground, as shown in Fig. 10. In this state, the fluid pressure sealing nozzle 25 is separated from the branch pipe liner bag 11 with the flange 11A remaining secured on the inner wall of the main pipe 20. More specifically, from the state shown in Fig. 9, the head 24 of the robot 22 is moved downward to separate the fluid pressure sealing nozzle 25 from the flange 11A of the branch pipe liner bag 11. Thereafter, the pull rope 26 shown in Fig. 9 is used to move to the right the robot 22, the fluid pressure sealing nozzle 25, and the pressure bag 30, as shown in Fig. 10. Then, the sealing pressure bag 34 is positioned opposite to the opening to the branch pipe 21.

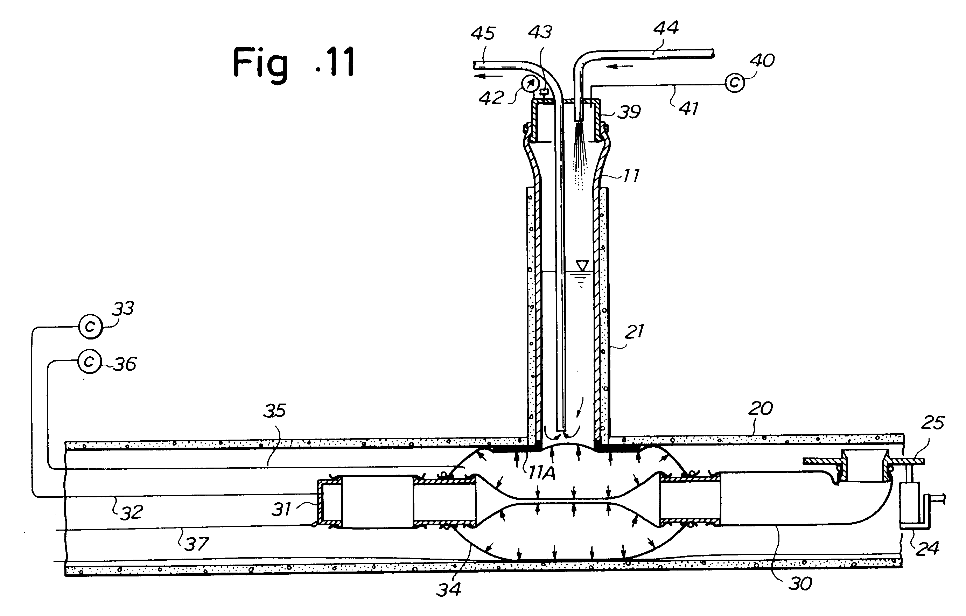

After the sealing pressure bag 34 has been positioned opposite to the opening to the branch pipe 21, the compressor 36 is driven to supply compressed air to the sealing pressure bag 34 through the air hose 35. The compressed air thus supplied causes the sealing pressure bag 34 to expand, resulting in sealing of the lower opening of the branch pipe liner bag 11 by the sealing pressure bag 34, as shown in Fig. 11.

Next, a cap 39 is mounted on the upper end of the branch pipe liner bag 11, as shown in Fig. 11, through which compressed air is supplied to the branch pipe liner bag 11 through an air hose 41 by driving a compressor 40. This causes the branch pipe liner bag 11 to be expanded by the pressure of the compressed air and accordingly urged against the inner wall of the branch pipe 21. The cap 39 may be equipped with a pressure gauge 42 and a safety valve 43, as illustrated.

Then, with the above state being maintained, hot water is supplied to the branch pipe liner bag 11 through a hot water hose 44 introduced into the branch pipe liner bag 11, and discharged therefrom through a discharge hose 45. By repeating these operations, the thermosetting resin impregnated in the branch pipe liner bag 11 is heated and hardened, whereby the inner wall of the branch pipe 21 is lined by the hardened branch pipe liner bag 11, thus repairing the branch pipe 21.

After the branch pipe liner bag 11 has been hardened as described above, the hot water within the branch pipe liner bag 11 is extracted, and the sealing pressure bag 34 is removed from the main pipe 20. In this manner, the hardened branch pipe liner bag 11 only remains on the inner wall of the branch pipe 21, that is, the branch pipe 21 has been lined or repaired by the branch pipe liner bag 11, thus completing a sequence of repairing operations for the branch pipe 21.

When the lining operations for the branch pipe 21 have been completed, the main pipe 20 is then lined.

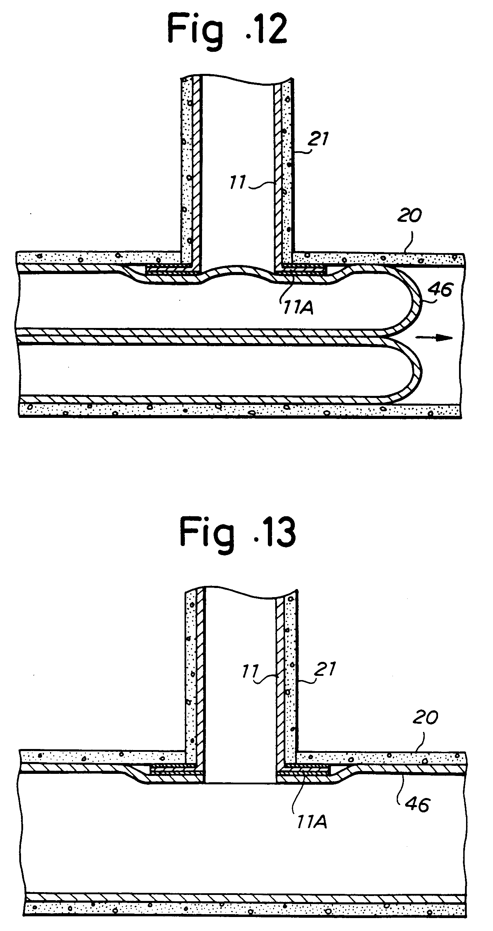

More specifically, a main pipe liner bag 46 is first everted into the main pipe 20 by fluid pressure, as shown in Fig. 12. After the main pipe liner bag 46 has been everted into the whole length of the main pipe 20, a hardenable resin impregnated in the main pipe liner bag 46 is hardened with the pressure inside the main pipe liner bag 46 being maintained constant. In this manner, the inner wall of the main pipe 20 is also lined by the main pipe liner bag 46.

Finally, a portion of the main pipe liner bag 46 corresponding to the opening to the branch pipe 21 is cut by a cutter, not shown, thus completing the lining operations for both the branch pipe 21 and the main pipe 20.

In the branch pipe liner bag 11 according to the present invention, the folded-out end portion 1a of the tubular unwoven fabric member 1 is sandwiched by the upper and lower ring-shaped unwoven fabric sheets 6, 4 to form the flange 11A. Since this flange 11A is provided with the same shape as the inner wall of the main pipe 20 by the frame 3 (an arcuate surface having the same curvature as the inner wall of the main pipe 20), the adhesive properties of the flange 11A with the main pipe liner bag 46 is highly improved, so that both are completely integrated with each other, which ensures that water or the like is prevented from penetrating from a joining portion therebetween into the pipes.

It should be particularly pointed out that in this embodiment, the plastic films 7, 5 are applied respectively on the upper surface of the upper unwoven fabric sheet 6 (the surface in contact with the inner wall of the main pipe 20) and the bottom surface of the lower unwoven fabric sheet 4 (the surface in contact with the main pipe liner bag 46), when forming the flange 11A of the branch pipe liner bag 11, and these plastic films 7, 5 are torn off after the hardenable resin impregnated in the unwoven fabric sheets 6, 4 has been hardened, which results in creating nap-like outer surfaces of the unwoven fabric sheets 6, 4, and as a result further improving the adhesive properties of the flange 11A with the main pipe 20 and the main pipe liner bag 46, so that water or the like is reliably prevented from penetrating.

As is apparent from the foregoing description, according to the present invention, a tubular unwoven fabric member 1 having its outer surface covered with a highly sealable film 2 is prepared; a portion of the film covering one end portion 1a of the tubular unwoven fabric member is torn off from the tubular unwoven fabric member; a plurality of slits b are cut into the end portion 1a of the tubular unwoven fabric member from which the film has been removed such that the slits extend in the longitudinal direction of the tubular unwoven fabric member 1; the end portion 1a of the tubular unwoven fabric member is folded out; the folded-out end portion 1a is mounted on a first unwoven fabric sheet 4 for forming a flange which has previously been set on a frame 3 having the same shape as the inner wall of a main pipe; a second unwoven fabric sheet 6 for forming a flange is placed on the folded-out end portion 1a of the tubular unwoven fabric member such that the folded-out end portion is sandwiched by the first and second unwoven fabric sheets 4, 6 for forming a flange 11A; a liquid hardenable resin is impregnated into the end portion 1a of the tubular unwoven fabric member and the first and second unwoven fabric sheets 4, 6; the liquid hardenable resin impregnated in the end portion 1a of the tubular unwoven fabric member and the first and second unwoven fabric sheets 4, 6 is hardened; and a hardenable resin 10 is impregnated into a remaining portion of the tubular unwoven fabric member 1, thus manufacturing a branch pipe liner bag 11 which provides a reliable integration with a main pipe liner bag 46 so that water or the like will be prevented from penetrating through the joining portion between them.

While the invention has been described in its preferred embodiment, it is to be understood that modifications will occur to those skilled in the art without departing from the scope of the invention.

## Claims

1. A method of manufacturing a branch pipe liner bag (11) comprising the steps of:
preparing a tubular unwoven fabric member (1) having its outer surface covered with a highly sealable film (2);
tearing off a portion of said film covering one end portion (1a) of said tubular unwoven fabric member;
cutting a plurality of slits (b) into said end portion (1a) of said tubular unwoven fabric member from which said film has been removed, said slits extending in the longitudinal direction of said tubular unwoven fabric member (1);
folding out said end portion (1a) of said tubular unwoven fabric member;
mounting said folded-out end portion (1a) on a first unwoven fabric sheet (4) for forming a flange which has previously been set on a frame (3) having the same shape as the inner wall of a main pipe;
placing a second unwoven fabric sheet (6) for forming a flange on said folded-out end portion (1a) of said tubular unwoven fabric member such that said folded-out end portion is sandwiched by said first and second unwoven fabric sheets (4, 6) for forming a flange (11A);
impregnating a liquid hardenable resin into said end portion (1a) of said tubular unwoven fabric member and said first and second unwoven fabric sheets (4, 6);
hardening said liquid hardenable resin impregnated in said end portion (1a) of said tubular unwoven fabric member and said first and second unwoven fabric sheets (4, 6); and
impregnating a hardenable resin (10) into a remaining portion of said tubular unwoven fabric member (1).

2. A method as claimed in claim 1, characterized in that said first and second unwoven fabric sheets (4, 6) for forming a flange have the outer surface thereof covered with a film (5, 7), and further comprising tearing off said film from each of said first and second unwoven fabric sheets after the hardenable resin impregnated in said first and second unwoven fabric sheets has been hardened.

3. A method as claimed in claim 1 or 2, characterized in that said tubular unwoven fabric member (1) and said first and second unwoven fabric sheets (4, 6) are made of a material selected from polyester, nylon, acrylic resin, and vinylon.

4. A method as claimed in any of claims 1 to 3, characterized in that said highly sealable film (2) is made of a material selected from polyethylene, vinyl chloride, vinylon, polyurethane, nylon, polypropylene, and polyethylene/nylon co-polymer.

## Patentansprüche

1. Verfahren zur Herstellung eines Abzweigrohrauskleidungsschlauches (11), das die folgenden Schritte aufweist:
Herstellen eines schlauchförmigen Faservlieselementes (1), dessen äußere Fläche mit einem stark abdichtfähigen Film (2) beschichtet ist;
Abreißen eines Abschnittes des Filmes, der auf einen Endabschnitt (1a) des schlauchförmigen Faservlieselementes beschichtet ist;
Schneiden einer Vielzahl von Schlitzen (b) in den Endabschnitt (1a) des schlauchförmigen Faservlieselementes, von dem der Film entfernt wurde, wobei sich die Schlitze in der Längsrichtung des schlauchförmigen Faservlieselementes (1) erstrecken;
Herausklappen des Endabschnittes (1a) des schlauchförmigen Faservlieselementes;
Befestigen des herausgeklappten Endabschnittes (1a) auf einer ersten Faservliesschicht (4) für das Bilden eines Flansches, die vorher auf einen Rahmen (3) gebracht wurde, der die gleiche Form wie die Innenwand eines Hauptrohres aufweist;
Anordnen einer zweiten Faservliesschicht (6) für das Bilden eines Flansches auf dem herausgeklappten Endabschnitt (1a) des schlauchförmigen Faservlieselementes, so daß der herausgeklappte Endabschnitt zwischen der ersten und der zweiten Faservliesschicht (4, 6) für das Bilden eines Flansches (11A) angeordnet wird;
Imprägnieren eines flüssigen, härtbaren Harzes in den Endabschnitt (1a) des schlauchförmigen Faservlieselementes und die erste und zweite Faservliesschicht (4, 6);
Aushärten des flüssigen, härtbaren Harzes, das in den Endabschnitt (1a) des schlauchförmigen Faservlieselementes und die erste und zweite Faservliesschicht (4, 6) imprägniert wurde; und
Imprägnieren eines härtbaren Harzes (10) in einen verbleibenden Abschnitt des schlauchförmigen Faservlieselementes (1).

2. Verfahren nach Anspruch 1, dadurch gekennzeichnet, daß bei der ersten und zweiten Faservliesschicht (4, 6) für das Bilden eines Flansches die äußere Fläche mit einem Film (5, 7) beschichtet ist, und daß es außerdem das Abreißen des Filmes von jeder der ersten und zweiten Faservliesschicht aufweist, nachdem das härtbare Harz, das in die erste und zweite Faservliesschicht imprägniert wurde, ausgehärtet wurde.

3. Verfahren nach Anspruch 1 oder 2, dadurch gekennzeichnet, daß das schlauchförmige Faservlieselement (1) und die erste und zweite Faservliesschicht (4, 6) aus einem Material bestehen, das unter Polyester, Nylon, Acrylharz und Vinylon ausgewählt wird.

4. Verfahren nach einem der Ansprüche 1 bis 3, dadurch gekennzeichnet, daß der stark abdichtfähige Film (2) aus einem Material besteht, das unter Polyethylen, Vinylchlorid, Vinylon, Polyurethan, Nylon, Polypropylen und einem Polyethylen/Nylon-Copolymeren ausgewählt wird.

## Revendications

1. Procédé de fabrication d'un sac de garniture d'un tuyau en dérivation (11) comprenant les étapes ci-dessous:
préparation d'un élément de tissu non tissé tubulaire (1) comportant une surface externe recouverte d'un film hautement étanche (2);
arrachage d'une partie dudit film recouvrant une partie d'extrémité (1a) dudit élément de tissu non tissé tubulaire;
découpage de plusieurs entailles (b) dans ladite partie d'extrémité (1a) dudit élément de tissu non tissé tubulaire, duquel le film a été enlevé, lesdites entailles s'étendant dans la direction longitudinale de l'élément de tissu non tissé tubulaire (1);
dépliage de ladite partie d'extrémité (1a) dudit élément de tissu non tissé tubulaire;
montage de ladite partie d'extrémité dépliée (1a) sur une première feuille de tissu non tissé (4) pour former une bride ayant auparavant été ajustée sur un cadre (3) ayant la même forme que la paroi interne d'un tuyau principal;
agencement d'une deuxième feuille de tissu non tissé (6) pour former une bride sur la partie d'extrémité dépliée (1a) dudit élément de tissu non tissé tubulaire, de sorte que ladite partie d'extrémité dépliée est prise en sandwich par les première et deuxième feuilles de tissu non tissé (4, 6) pour former une bride (11A);
imprégnation d'une résine durcissable liquide dans ladite partie d'extrémité (1a) dudit élément de tissu non tissé tubulaire et les première et deuxième feuilles de tissu non tissé (4, 6);
durcissement de ladite résine liquide durcissable imprégnée dans ladite partie d'extrémité (1a) dudit élément de tissu non tissé tubulaire et les première et deuxième feuilles de tissu non tissé (4, 6); et
imprégnation d'une résine durcissable (10) dans une partie restante de l'élément de tissu non tissé tubulaire (1).

2. Procédé selon la revendication 1, caractérisé en ce que lesdites première et deuxième feuilles de tissu non tissé (4, 6), destinées à former une bride, comportent une surface externe recouverte d'un film (5, 7), et comprenant en outre l'étape d'arrachage dudit film de chacune desdites première et deuxième feuilles de tissu non tissé après le durcissement de la résine durcissable imprégnée dans lesdites première et deuxième feuilles de tissu non tissé.

3. Procédé selon les revendications 1 ou 2, caractérisé en ce que ledit élément de tissu non tissé tubulaire (1) et lesdites première et deuxième feuilles de tissu non tissé (4, 6) sont composés d'un matériau sélectionné parmi le polyester, le nylon, la résine acrylique et le vinylon.

4. Procédé selon l'une quelconque des revendications 1 à 3, caractérisé en ce que ledit film hautement étanche (2) est composé d'un matériau sélectionné parmi le polyéthylène, le chlorure de vinyle, le vinylon, le polyuréthane, le nylon, le polypropylène et un copolymère polyéthylène/nylon.
